# EUROPEAN PATENT APPLICATION

(11) **EP 1 775 620 A1**
(43) Date of publication of application: **18.04.2007**
(21) Application number: 04807148.4
(22) Date of filing: 16.12.2004
(51) Int. Cl.: G02B 26/00, G02B 5/20, G03B 21/14

(54) **COLOR WHEEL DEVICE AND PROJECTOR USING THE SAME**

(30) Priority: 13.04.2004 JP 2004117505
(71) Applicant: Plus Vision Corp., Bunkyo-ku Tokyo 112-0013 (JP)
(72) Inventor: SEKIGUCHI, Nobutoshi, c/o Plus Vision Corp., Tokyo 112-0013 (JP); OMI, Satoshi, c/o Plus Vision Corp., Tokyo 112-0013 (JP); ISHII, Akio, c/o Plus Vision Corp., Tokyo 112-0013 (JP)
(74) Representative: Kador, Ulrich
(86) International application number: PCT/JP2004/018789
(87) International publication number: WO 2005/101090

(57) **Abstract**

The present invention provides a color wheel device for setting a desired display mode without using a complex mechanical apparatus.

A color wheel device 1 includes a first color wheel 10 having transmitting regions of W, R, G, B at a circumferential direction and rotated on an axis, a second color wheel 20 having transmitting regions of W, R, G, B at a circumferential direction and rotated at the same axis of the first color wheel, and selecting means for a relative location between the first and second color wheels 10, 20. While the first and second color wheels are rotated, the light is entered into the first color wheel 10 and is outputted from the second color wheel 20.

## Description

### Field of Invention

The present invention relates to a projector using a space-modulation device, and more particularly, to DLP type projector using a DMD (Digital Micro-mirror Device).

### Background of Invention

Projectors for displaying color images using the DMD or a liquid crystal device as the space-modulation device have come into a practical use. The DLP type projector using DMD displays the color images by scaling up the reflected light from DMD by such lens etc. The DMD is made of a semiconductor device and reflects a light.

Applicant discloses the DLP type projector in Japanese patent No. 3, 121, 843. As shown in FIG. 19, the light from the white color light source 51 is reflected by the ellipse mirror 52, the reflected light enters into the rotatable color wheel 53. The color wheel 53 is transmission filters which arrange color filters of R (red color), G (green color) and B (blue color) at a circumferential direction. The light transmitted from the color wheel passes through the condenser lens 1 and is reflected by a spherical mirror 2 as a return mirror, and then enters into the DMD 56 at a high angle. The light reflected by the pixels at ON-condition among the lights which illuminate the DMD 56, is displayed at the screen 58 through the projection lens 57. The pixels of the DMD 56 are driven at a synchronized with the color wheel 53 transmitting R, G, B lights sequentially, which enables the display of color images in time-sharing.

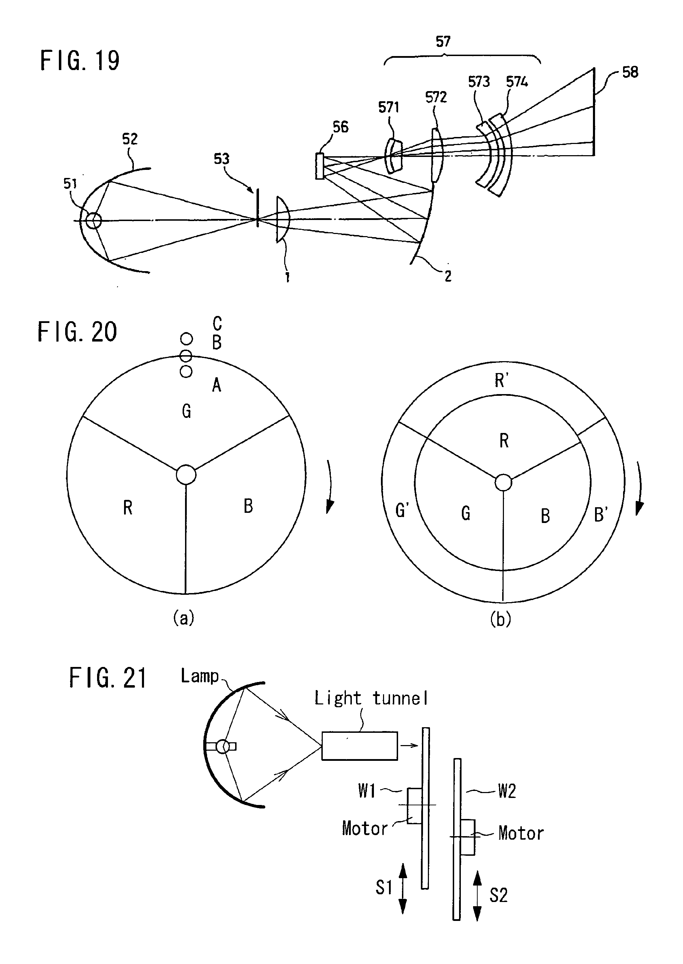

Japanese Laid-open patent application No. 9-163391 discloses a projector for improving brightness of displayed images by moving the color wheel having such the sequential color filters. By the movement of the color wheel, all beams or partial beams from the illuminating source are transmitted from the color wheel. As shown in fig. 20(a), the color filters of R, G and B are arranged on the color wheel, the color wheel moves at a direction of a right angle to an axis of rotation. Accordingly the position of the incident beam is varied such as A, B and C, which enables the display of the projection images of a color-mode or a black and white-mode (or gray scale-mode) Particularly the display of the black and white-mode is performed if the brightness is taken priority. Also as shown in fig. 20(b), the different pattern of color filters of R', G' and B' is added at a periphery of the color wheel for selecting different color balances and a white color-point by changing its color ratios.

Furthermore if all regions of color wheel are formed of three primitive color filters, the brightness may be short. In order to avoid this, a filter which transmits the white light from the light source has been used in the color wheel in addition to the tree primitive color filters. However the additional region for partially transmitting the white light of the color wheel makes the color contrast decrease. For solving such problems, the applicant submitted Japanese patent application number 2003-90290. This patent application provides two color wheels W1, W2 of different color ratios of color filters respectively as shown in fig. 21 (for example one color wheel W1 is made of R, G, B three primitive color filters and the other color wheel W2 adds the color filter for the white light), any color wheel is used in response to the projection images by moving it in the directions S1, S2 perpendicular to the axis of rotation.

Furthermore the applicant submitted Japanese Laid-open 2003-307705, 2003-302598 and 2003-241305 for inhibiting the decreases of the color contrast and/or color-reproducibility. 2003-307705 discloses a projector, which enables to adjust the illumination and coloration by changing the position of the color wheel. 2003-302598 discloses color filters including an outer filer and an inner filter. The outer filter transmits one color among the three primitive colors and reflects the other two colors. The inner filter reflects the one color which is transmitted from the outer filter. The inner filer also transmits one color among the two colors reflected by the outer filter and transmits other color among them. One color reflected by the inner filter and one color among the two colors transmitted from the inner filter are entry into the DMD, consequently the ratio of red light entering into to the DMD is increased, which results in the improvement of the color rendering. 2003-241305 discloses a projector having a mechanism of movement for moving the color wheel for selecting either a full color display or the black and white display in response to the position of the color wheel.

### Problem to be solved by Invention

However, there are following problems in the conventional projectors. For example, Laid-open 09-163391, Laid-open 2003-307705 and patent application NO. 2003-90290 need the switching apparatus for moving the color wheel, which causes the complexity of the projectors. If the switching apparatus is manipulated manually, it is difficult to handle the projector hung down from the ceiling for an use of home-theater especially because users can not touch the switching apparatus. Also, since Laid-open 2003-302598 arranges color filter with different pattern at the outer and inner regions of the color wheel, the manufacturing of the color wheel is not easy and the cost is increased.

The purpose of the present invention resolves the above problems and provides the color wheel device which enables to switch the setting corresponding to the display modes easily without the complex mechanical mechanism.

Furthermore the present invention provides the projector which enables to adjust settings of brightness and coloration of the displayed images by using the color wheel device.

### Means for solving the problems

The color wheel device of the present invention includes a first color wheel having transmitting regions of white color, red color, green color and blue color at a circumferential direction, the first color wheel rotated on an axis, a second color wheel having transmitting regions of white color, red color, green color and blue color at a circumferential direction, the second color wheel rotated on the same axis of the first color wheel, and a selecting device for selecting a relative location between the first and second color wheels, a light is entered into the first color wheel and the light is outputted from the second color wheel while the first and second color wheels are rotated.

Preferably, the first color wheel includes a plurality of transmitting regions for white color and any one of the transmitting regions for white color is greater than any other transmitting regions. Also the second color wheel includes a plurality of transmitting regions for white color and any one of the transmitting regions for white color is greater than any other transmitting regions.

Preferably any one of transmitting regions of red color, green color and blue color is disposed between the transmitting regions of white color in the first and second color wheels.

Preferably the transmitting regions combined by the first and second color wheels are white, red, green and blue colors when the selecting device selects a first relative location, and wherein the transmitting regions combined by the first and second color wheels are red, green and blue colors when the selecting device selects a second relative location.

Preferably, the transmitting region combining the red color is greater than other transmitting regions combining other colors when the second relative location is selected.

Preferably, the first and second color wheels include transmitting regions whose central angles are 125, 55, 70, 55, and 55 degrees respectively and wherein the center angle of 125 degree of the transmitting region is white color.

Preferably, the selecting device includes a positioning device for positioning at least one of the first and second color wheels. Furthermore the selecting device selects the first relative location when the first or second color wheel is rotated at a first direction and wherein the selecting device selects the second relative location when the first or second color wheel is rotated at a second direction opposite the first direction.

An illumination optics device of the present invention includes the above color wheel device and a light source for providing the light with the color wheel device. A projector of the present invention includes the above color wheel device, a light source for providing the light with the color wheel device, a modulation device for modulating the light transmitted from the color wheel device, and a projection device for projecting the modulated light.

Preferably, the projector further includes an input device for selecting a display mode among a plurality of display modes, the selecting device selects the relative location between the first and second color wheels in response to the input from the input device. The modulation device may include DMD or a liquid crystal device.

### Advantage of Invention

According to the color wheel device of the present invention, an overall color ratio can be varied easily by selecting the relative location between the combining first and second color wheel with different patterns of color filters on the same axis. Therefore it is no need the complex apparatus for moving the color wheel at the perpendicular direction to the axis as conventional projectors, thus a low cost and miniaturization of the color wheel device can be achieved. Furthermore by applying such color wheel device with the projection type image display device such as projectors, the display modes for adjusting the brightness and coloration of the projected images can be changed easily.

### Description of the preferred embodiments

The color wheel device according to the present invention is preferably used for the DLP type projector. The preferred embodiment will be explained in reference to drawings hereinafter.

### Embodiment

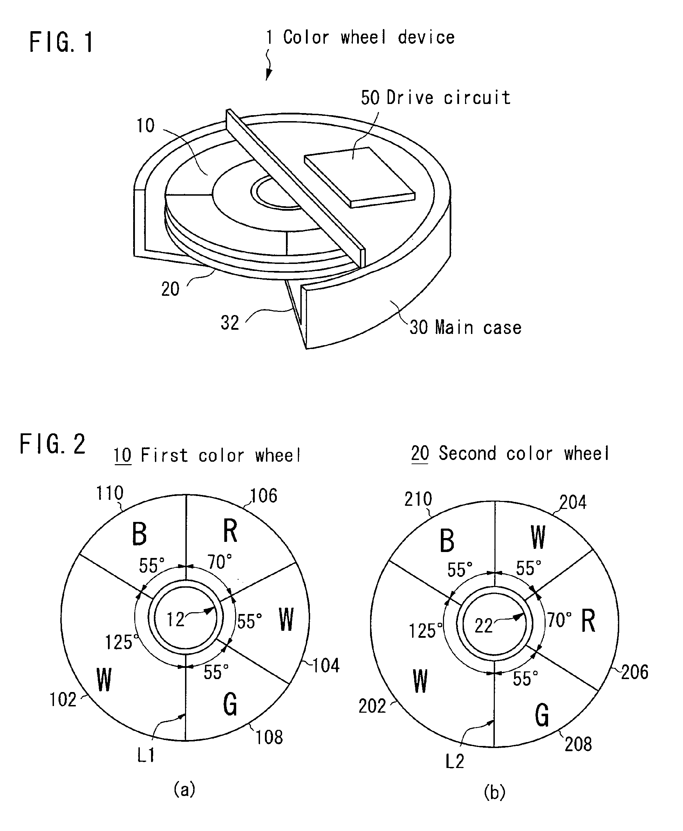

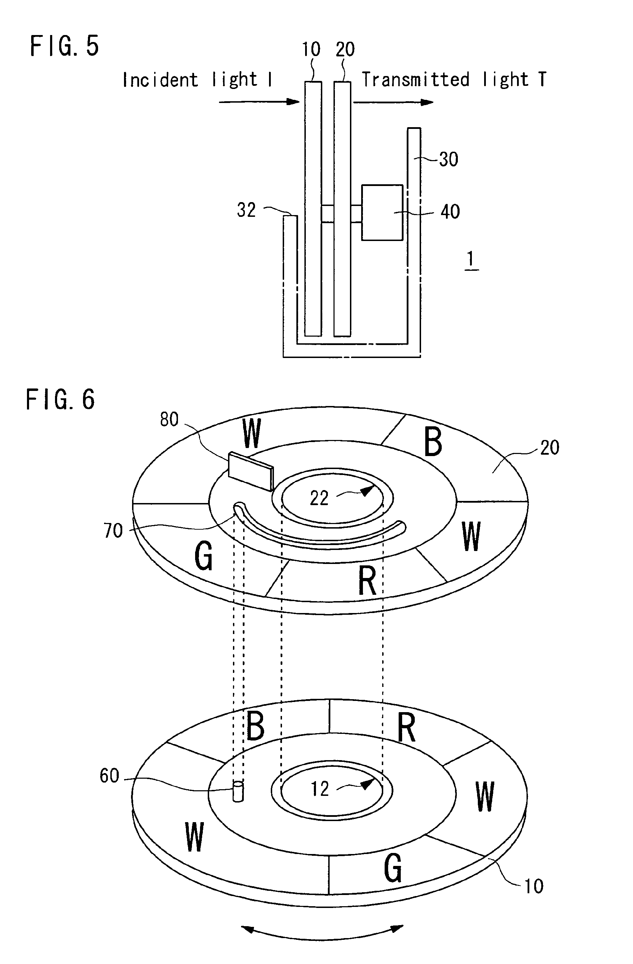

Fig. 1 shows an overview of a color wheel device according to an embodiment of the present invention. As shown in fig. 1, the color wheel device 1 includes a first color wheel 10, a second color wheel 20 fitted on the same rotation axis of the first color wheel 10, a main case 30 accommodating the first and second color wheels, motor 40(see fig. 5) coupled with a bearing of the first and second color wheels, and selecting means for selecting the relative location between the first and second color wheels. A cut-away portion 32 is formed in the main case 30. A white light from a light source enters into the first color wheel 10 through the cut-away portion 32 and is outputted from the second color wheel 20.

Fig. 2(a) and (b) show a plane view of each first and second color wheel. The first color wheel 10 is made of glass material of a circular thin plate. A circular through hole 12 is formed at a central portion of the first color wheel 10. The through hole 12 turns to a bearing portion which is coupled with the rotation axis of the motor 40. In addition, transmitting regions (or transparent regions) of red color(C), green color(G), blue color(B) and white color(W) are formed at a peripheral of the bearing portion 12. The transmitting regions of R, G, B is made of filters which transmits R, G, B and these filters, for example, are coated on the surface of the glass material. The transmitting region of W does not need to be coated filters on the glass and the white light from the light source just transmits the glass material.

The first color wheel 10 includes two of W transmitting regions 102, 104 and R, G, B transmitting regions 106, 108, 110. The inner angle(center angle) concerning the rotation axis for the W transmitting region 102 is 125 degree, the inner angle for the W transmitting region 104 is 55 degree. The R and B transmitting regions 106, 110 are arranged in between one-sided spacing of W transmitting regions 102 and 104, the inner angle for the R transmitting region 106 is 70 degree and the inner angle for the B transmitting region 110 is 110 degree. The G transmitting region 108 whose inner angle is 55 degree is arranged between the other-sided spacing of the W transmitting regions 102 and 104.

The second color wheel 20 has approximately the same diameter of the first color wheel 10 and a bearing portion 22 of a through hole is formed at the center. Two of W transmitting regions 202, 204 and R, G, B transmitting regions 206, 208, 210 are formed at a periphery of the bearing portion 22. The W transmitting region 202 whose inner angle (center angle) with respect to the rotation axis is 125 degree, the inner angle for the W transmitting region 204 is 55 degree. The R and G transmitting regions 206 and 208 are arranged between one-sided spacing of the W transmitting regions 202 and 204, the inner angle for the R transmitting region 206 is 70 degree and for the G transmitting region 208 is 55 degree. The B transmitting region 210 whose inner angle is 55 degree is arranged between the other-sided spacing of the W transmitting regions 202 and 204. In this way the arrangement pattern of the second color wheel 20 is different from that of the first color wheel 10.

The relative location between the first and second color wheels 10, 20 is selected by the selecting means. Preferably the selecting means selects the relative location by selecting either a normal rotation or a reverse rotation of the motor 40(details is explained hereinafter). In addition to the above method, for example the first color wheel 10 may be fixed to the rotation axis of the motor 40 and the second color wheel 20 may be fixed to the first color wheel 10 by mechanical means with a predetermined relative location. Otherwise, the first and second color wheels 10, 20 may be rotated by an individual motor at the same speed so as to generate the relative angle between the first and second color wheels.

The present embodiment includes two relative locations of first and second relative locations, any of relative location is selected. As shown in fig.2(a), a boundary line L1 between the W transmitting region 102 and the G transmitting region 108 of the first color wheel 10 is referred to a reference position. Also as shown in fig.2(b), a boundary line L2 between the W transmitting region 202 and G transmitting region 208 of the second color wheel 20 is reference to a reference position.

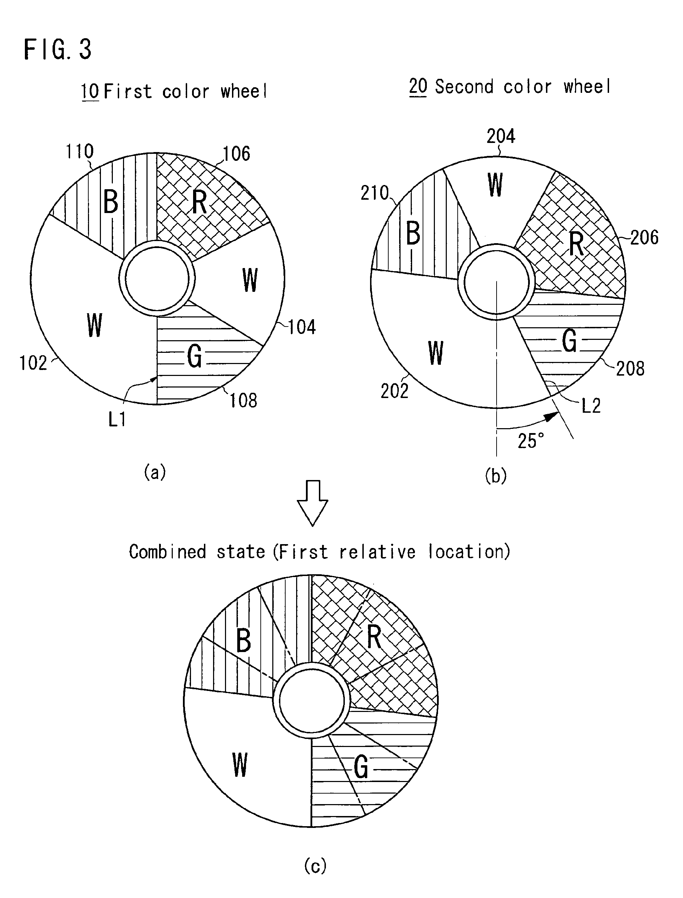

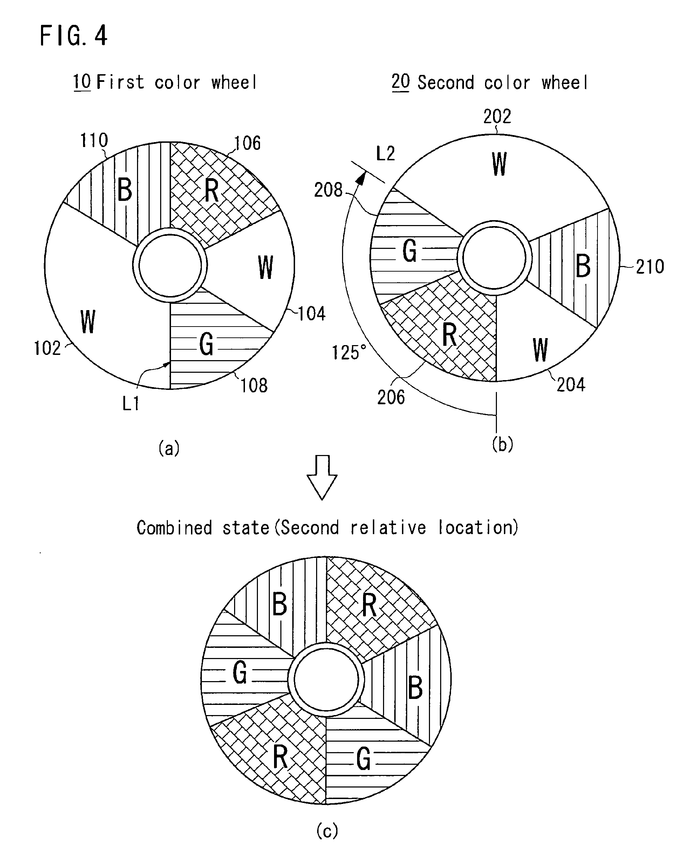

As shown in fig. 3(a) and (b), the first relative location is defined that the first color wheel 10 stays at the reference position and the boundary line L2 of the second color wheel 20 is rotated by 25 degree from the reference position counterclockwise. The second relative location, as shown in fig. 4(a) and (b), is defined that the first color wheel 10 stays at the reference position and the second color wheel 20 is rotated by 125 degree clockwise. Of course it is the equivalent that the second color wheel 20 may stay at the reference position and the first color wheel may be rotated.

If the first relative location is selected, the color ratio combined by the first and second color wheels 10, 20 turns to the substantially equal arrangement W, R, G, B as shown in fig. 3(c). The inner angle of the W transmitting region is 100 degree, the inner angle of the G transmitting region is 80 degree, the inner angle of the R transmitting region is 100 degree and the inner angle of the B transmitting region is 80 degree. On the other hand if the second relative location is selected, the color ratio combined by the first and second color wheels 10, 20 turns to the arrangement R, G, B, R, G, B as shown in fig.4(c). Each inner angle of the R transmitting region is 75 degree, each inner angle of the G transmitting region is 55 degree and the inner angle of the B transmitting region is 55 degree. In any case of fig.3(c) and fir.4(c), the R transmitting region is greater that the B and the G transmitting regions respectively.

Fig.5 shows a relationship of an incident light into and exiting light from the color wheel device. The white light, namely the incident light I passes through the first and second color wheels 10, 20 in turn. Thus the transmitted light T is outputted from the color wheel device 1 sequentially in response to the color ratio combined by the first and second color wheels. When the first relative location is selected, the transmitted light T turns to W, R, G, B light per one rotation. It results in a relatively bright illumination light. While if the second relative location is selected, the transmitted light T turns to R, G, B, R, G, B light per one rotation. It results in an illumination lights with a relatively rich color rendering.

Next, fig. 6 shows the preferred selecting means (positioning means) in the embodiment. As shown in fig. 6, a column-shaped protruding pin 60 is formed on a back side (opposed to the second color wheel) of the first color wheel. The pin 60 can be placed on between the bearing portion 12 and the filter regions. Also, an opening 70 is formed in the second color wheel 20 for inserting the pin 60 and for positioning it. The opening 70 is placed on between the bearing portion 22 and the filter regions and its shape is a circular-arc slot which is concentric with the rotation axis. When the first and second color wheels 10, 20 are fixed on the same axis, the pin 60 is inserted into the opening 70, and then the first relative location or the second relative location is selected by the normal rotation or the reverse rotation of the first color wheel 10.

The length of opening 70 in the circumferential direction corresponds to a distance of the movement of the second color wheel 20 relative to the first color wheel 10. For example, when the first relative location is selected as shown in fig. 3, the second color wheel 20 is rotated by 125 degree counterclockwise relative to the first color wheel 10. When the second relative location is selected as shown in fig. 4, the second color wheel 20 is rotated by 125 degree clockwise relative to the first color wheel 10. Namely, for switching from the first relative location to the second relative location, the second color wheel 20 is rotated by 150 degree relative to the first color wheel 10, the length of the opening 70 in the circumferential direction corresponds to the inner angle of 150 degree.

Furthermore, a member 80 for receiving a wind is attached adjacent to the opening 70 of the second color wheel 20. Preferably the wind-receiving member 80 is formed of a platy protrusion which extends in the radial direction. When the second color wheel 20 is rotated, the pin 60 is pressed with either end of the opening 70 by which the wind-receiving member 80 receives the wind.

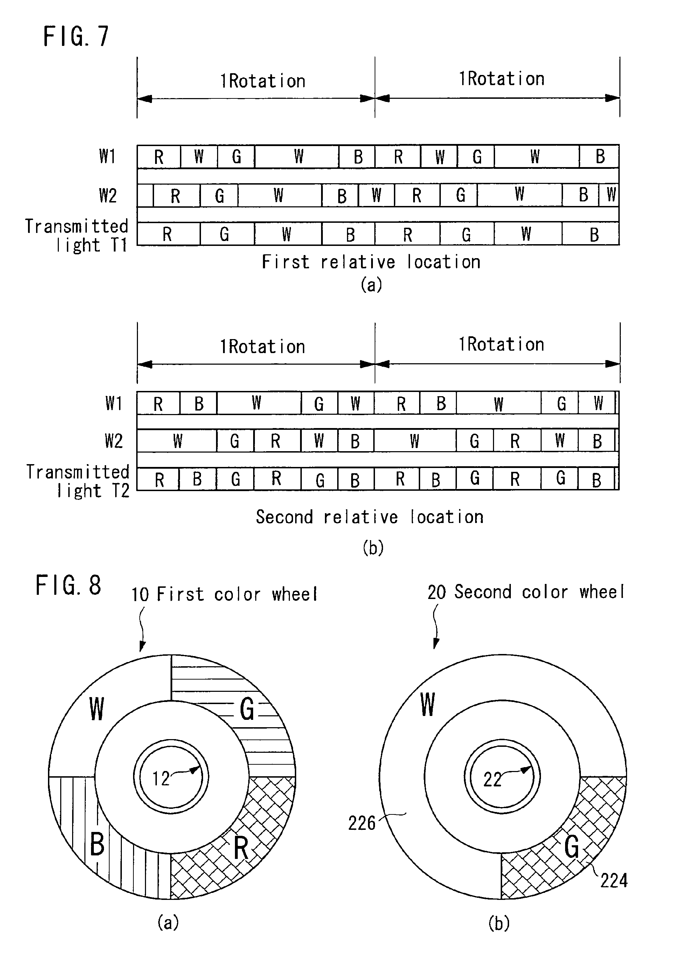

The first and second color wheel 10, 20 are attached on the rotation axis of the motor 40, the rotation axis of the motor 40 is driven by the driving circuit at the normal rotation as shown in fig. 1. The pin 60 is contacted with either end of the opening 70 in response to the normal rotation of the first color wheel 10, which causes the normal rotation of the second color wheel 20. The first color wheel 10 is rotated with a constant load from the second color wheel 20 because the second color wheel 20 receives the resistance though the wind-receiving-member 80. Consequently the second color wheel 20 can not be separated from the first color wheel 10 and the first and second color wheels 10, 20 are rotated at the normal rotation by keeping the positioned contact of the pin 60 with one end of the opening 70. This arrangement of the first and second colors wheel 10, 20 turns to the first relative location. Fig. 7(a) shows the combined pattern of the transmitted light T1 when the first relative location is selected. W1 and W2 indicates the transmitted lights from the first and second color wheels respectively.

In case of switching from the first relative location to the second relative location, the rotation axis of the motor 40 is reversed by the drive circuit 50. The pin 60 is separated from the one end of the opening 70 in response to the reverse rotation of the first color wheel 10 and then the pin 60 is contacted with the other end of the opening 70 after the first color wheel 10 is rotated by 150 degree, which makes the second color wheels rotate reversely. Similar to the above, both color wheels 10, 20 are rotated with a constant force between the pin 60 and the other end of the opening 70 by the wind-receiving-member 80. This arrangement of the first and second color wheels turns to the second relative location and the combined pattern of the transmitted light T2 is shown in fig. 7(b).

As above explanation, the relative location of the second color wheel 20 to the first color wheel 10 can be changed and is remained by switching the rotated direction of the motor 40. Also, the color ratio of the color wheel device can be varied.

It is noted that the wind-receiving member 80 is not always necessary for positioning the first and second color wheels. Without the wind-receiving member, the second color wheel 20 can follow the first color wheel by its weight so as not to be separated.

The positioning means can be substituted for other configuration. For example the first color wheel 10 is fixed on the rotation axis of the motor 40 and the second color wheel is fixed on the rotation axis sliderably with a constant friction force. When the second color wheel 20 is positioned, the second color wheel 20 is rotated by a force exceeding the friction force until the pin 60 is contacted with the end of the opening 70. In this case, the rotation of the second color wheel is made manually. Instead it is not necessary to switch the normal rotation or the reverse rotation of the motor 40 for changing the color ratio.

Furthermore, the first and second color wheels may be fixed each other by using screws after the second color wheel 20 is positioned to the first color wheel 10 using the pin 60 and opening 70, after that the color wheels are rotated by the motor.

Next, the color wheel device of the second embodiment of the present invention will be explained. Fig. 8(a), (b) show plane views of the first and second color wheels. The first color wheel 10 includes the transmitting regions of red color (R), green color (G), blue color (B) and white color (W) at the circumferential peripheral direction outside the bearing portion 12. The R, G, B, W transmitting regions, namely the areas of those color filters are equal each other. In other words, each R, G, B, W transmitting region has a fan-shaped area whose inner angle makes 90 degree in relation to the rotation axis.

The second color wheel 20 is substantially same as the first color wheel 10, but the arrangement pattern of the transmitting regions are different. The second color wheel 20 includes a first color transmitting region 224 and white color transmitting region 226 in the periphery of the bearing portion 22. The first color transmitting region 224 can be any R, G and B. R is exemplified here. The area of the R transmitting region 224 of the second color wheel 20 is same as the R transmitting region of the first color wheel 10. Thus except for the first color transmitting region 224, the transmitting region 226 transmits the white color.

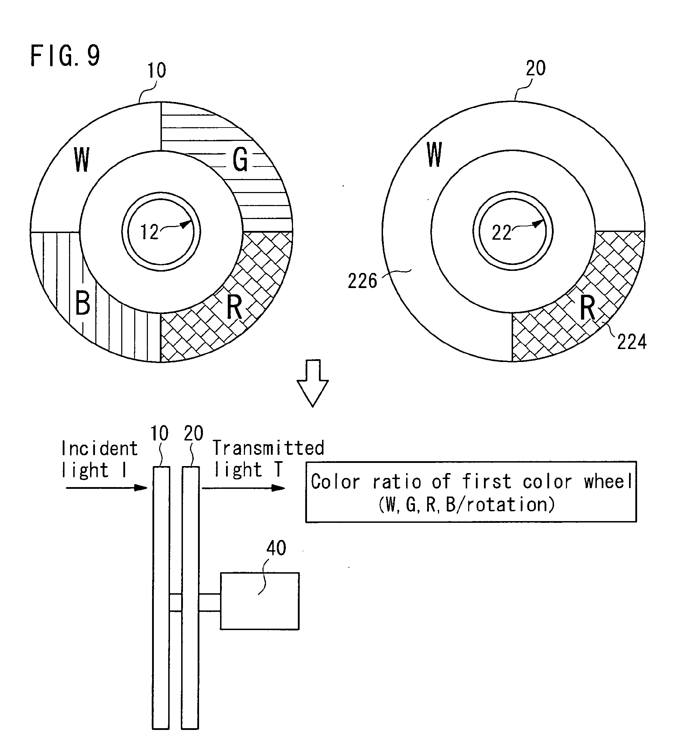

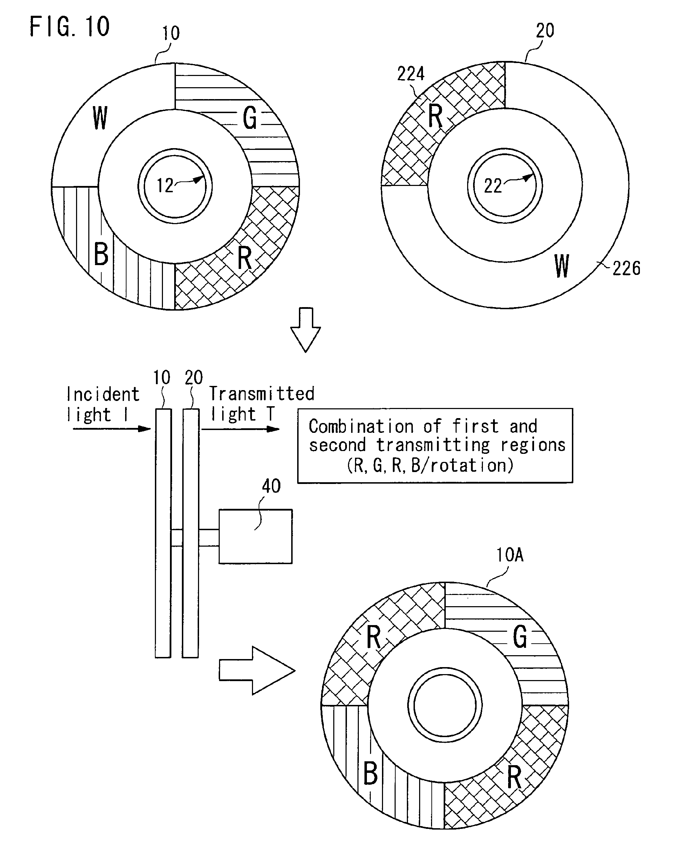

Fig. 9 and fig. 10 explain the color ratio when the first and second color wheels are combined. Fig. 9 shows the exemplification of the rotation when the R transmitting region of the first color wheel 10 is perfectly overlapped with the R transmitting region 224 of the second color wheel 20. The white light from the light source, namely the incident light I is entered into the first and second color wheels sequentially. At the moment, since the W transmitting region 226 of the second color wheel 20 is perfectly matched with the W, G, and B transmitting regions of the first color wheel 10 and the R transmitting region 224 is perfectly matched with the R transmitting region of the first color wheel, the color ratio obtained by the combination of the first and second color wheels is not changed. Namely the incident light I which is entered into the first color wheel 10 is outputted from the second color wheel 20 as the transmitted light T of W, G, R, B sequentially.

Fig. 10 shows the exemplification of the rotation when the W transmitting region of the first color wheel 10 is perfectly overlapped with the R transmitting region 224 of the second color wheel 20. In this case, the second color wheel 20 is fixed after it is rotated by 180 degree from the state of fig. 9. The whole color ratio of the color wheel device turns to R, G, R, B by the combination of the first and second color wheels as if they were a color wheel 10A. This color ratio causes the reduction of the brightness of the transmitted light T but increment of the coloration of red component of the transmitted light T in comparison with fig. 9.

As described above, it is possible to select the transmitted light T of W, G, R, B as shown in fig.9 or the transmitted light T of R, G, R, B as shown in fig.10 by the combination of the first and second color wheels.

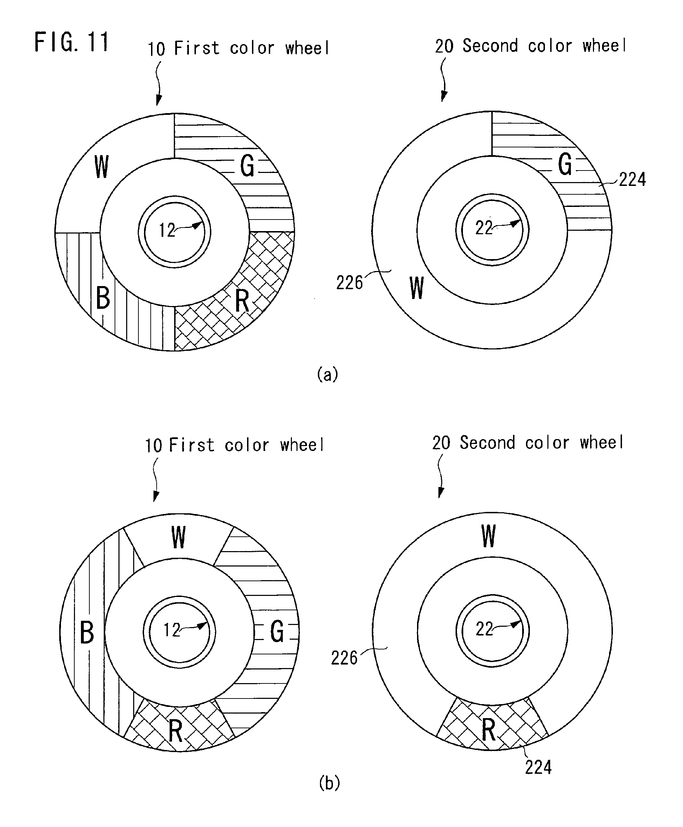

Although the second embodiment explains that the first color transmitting region 224 of the second color wheel 20 is same as the R transmitting region of the first color wheel 10, it is not limited necessarily. For example, as shown in fig. 11(a), the first color transmitting region 224 may be the green color transmitting region. In this case, the color ratio of W, G, B, R or G, G, R, B can be selected by rotating the second color wheel 20 by 90 degree in relation to the first color wheel 10.

Furthermore although the second embodiment explains that the each area of W, G, R, B of the first color wheel 10 is equal each other, it is not limited necessarily. For example as shown in fig. 11(b), the ratio of W, G, R, B area can be differed. However, if the first color transmitting region 224 of the second color wheel 20 is R, it prefers that the area of the w transmitting region of the first color wheel 10 is equal to that of the R transmitting region of the first color wheel.

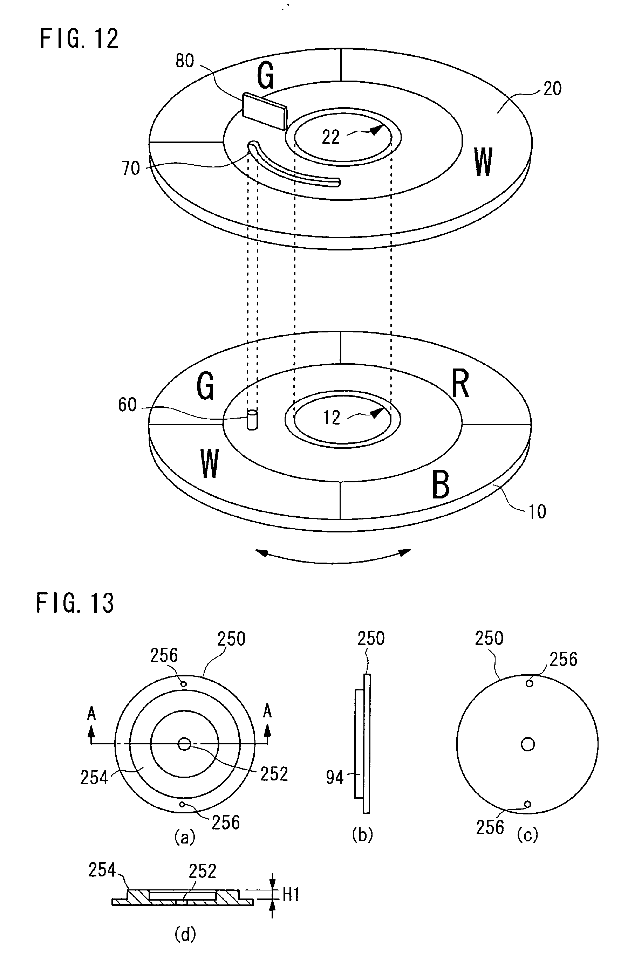

Next, the positioning means when the first and second color wheels are rotated according to the second embodiment will be explained. A shown in fig. 12 the column shaped protruded pin 60 is formed on the back side (opposed the second color wheel) of the first color wheel 10 similarly with the first embodiment.

On the other hand the opening 70 for positioning is formed in the second color wheel 20. When the first and second color wheels are attached on the same axis, the pin 60 is inserted into the opening 70. The opening 70 between the bearing portion 22 and color filter regions is formed in a fan-shaped slot which is concentric with the rotation axis.

The length of the opening 70 in the circumferential direction corresponds to a distance which the second color wheel 20 moves relative to the first color wheel 10. For example the second color wheel 20 rotates by 180 degree in relative to the first color wheel 10 in fig 9 and fig 10, in this case the opening 70 has the length which is equivalent with the angle of 180 degree. Also, since the second color wheel 20 rotates by 90 degree in relative to the first color wheel 10 in fig 11(a), the opening 70 has the length corresponding to the 90 degree. The exemplification in fig 12 shows that second color wheel 20 is the rotated by 90 degree.

The second color wheel 20 is also positioned with the first color wheel 10 by using the wind-receiving member 80 in the second embodiment. The rotation axis of the motor 40 is driven at the normal or reverse clockwise by the drive circuit 50 as shown in fig 1. When the fist color wheel 10 is rotated clockwise, the pin 60 is contacted with one end of the opening 70, which makes the second color wheel 20 rotate clockwise. The first color wheel is rotated with the constant load from the second color wheel 20 because the second color wheel 20 receives the resistance through the wind-receiving member 80. Thus the second color wheel 20 can not be separated from the first color wheel 10 and both color wheels are rotated together keeping the contact between the pin 60 and one end of the opening.

For switching the color ratio of the color wheel device, the rotation axis of the motor 40 is driven at the normal or reverse counterclockwise by the drive circuit 50. When the first color wheel 10 is rotated counterclockwise, the pin 60 is separated from one end of the opening 70 and is contacted with the other end. As above mentioned, both color wheels are rotated with the applied constant force between the pin 60 and the other end of the opening 70.

In the second embodiment, the relative location of the second color wheel 20 to the first color wheel 10 can be varied by switching the rotation direction of the motor 40 and the color ratio of the color wheel device can be varied.

The wind-receiving member 80 of the positioning means is not always necessary. Unless there is member 80, the second color wheel can follow the first color wheel by the weight of itself so as not to separate from the first color wheel.

Although the positioning means shown in fig. 12 employs the single wind-receiving member 80, it is not limited and multiple members may be attached at the circumferential direction. Preferably each member may be spaced equally. This configuration makes the balance improve when the first and second color wheels are rotated.

Next, an exemplification of the second color wheel will be explained. Fig. 13 shows a base member 250 which is coupled with the bearing portion 22 of the second color wheel. The base member 250 is made of a ring-shaped metal such as stainless steel and an axis hole 252 is formed at the central portion of the base member 252. A ring portion 254 with a surface protruding by height H, which is concentric with the axis hole 254, is formed. The inner diameter of the ring portion 254 is D1. Furthermore a pair of holes 256 is formed at opposite positions of the peripheral of the ring portion 254. The pair of holes 256, which are not shown here, are served to secure a glass substrate having color filters with the base member 250.

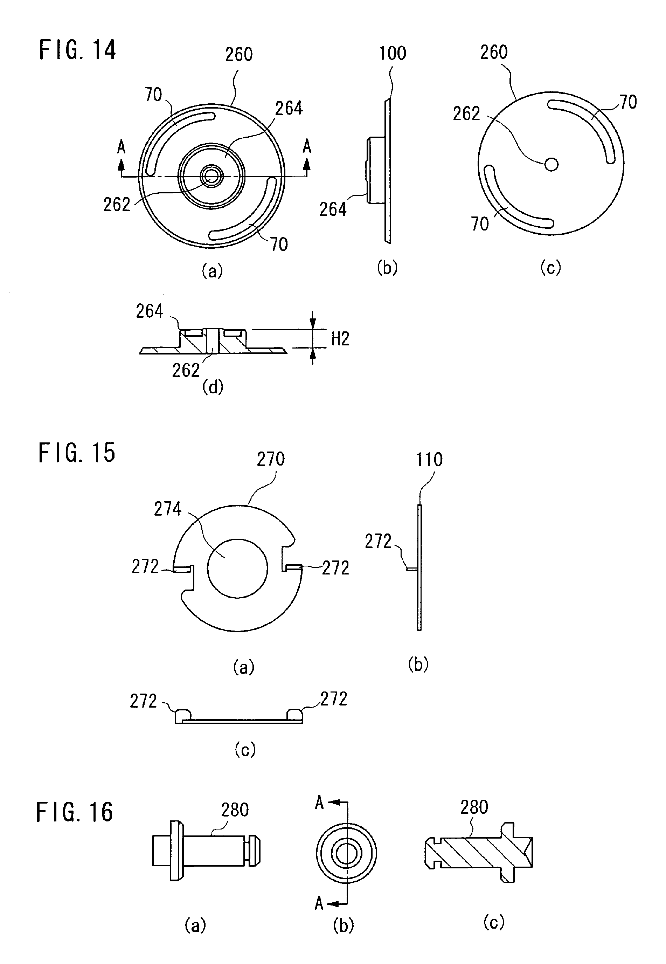

Fig 14 shows the positioning-base member. The positioning base member 260 is made of a ring-shaped metal such as stainless steel and an axis hole 262 is formed at the center. A protruding portion 262 of height H2 and outer diameter D2 is also formed at the central portion including the axis hole 262. The outer diameter D2 of the protruding portion 264 is slightly smaller than the inner diameter D1 of the ring portion 254, the height H2 is greater than H1, so that the protruding portion can be inserted into the ring portion 254. A pair of openings 70 is formed at the peripheral of the protruding portion 264. The openings 70 are fan-shaped slots which are expanded at right angle respectively.

Fig. 15 shows a wind-receiving plate. The wind receiving plate 270 is made of metal such as stainless steel and has a pair of upright protruding surfaces 272. The protruding surfaces 272 are formed by folding the notches, which are formed in the plate partially, at right angle at the opposite positions. An opening 274 is also formed in the center for inserting the protruding portion 264 of the positioning-base member 260.

Fig. 16 shows a fixing pin for securing the base member 250 with the positioning base 260. The fixing pin 280 is inserted into the axis hole 252 of the base member 250 and axis hole 262 of the positioning base 260 and then both members are secured by caulking the pin 280. Although the first color wheel is not shown here, one pair of protrusions for inserting the openings 70 is formed in the first color wheel, and the first and second color wheels are positioned by the insertion of the protrusions into the openings.

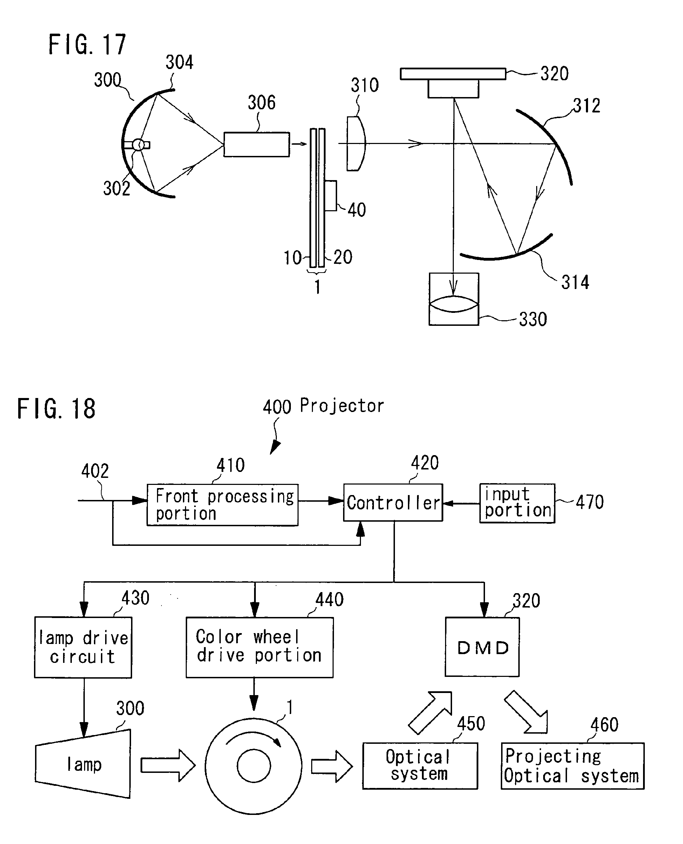

Next, fig. 17 shows a projector applying the color wheel device according to the present invention. As shown in fig. 17, a lamp 300 includes a discharge lamp 302 and a reflector 302. The light collected by the reflector 302 is entered into a light tunnel 302 (or a light integrator). The light tunnel 302 makes the incident light beams substantially equal illumination, and then the exited light is entered into the color wheel device 1.

The first and second color wheels 10, 20 are rotated by the motor 40, the light beam is entered into the rotated first and second color wheel at approximately right angle. The normal rotation of the motor 40 selects the first relative location and reverse rotation selects the second relative location.

The transmitted light from the color wheel device 1 is then illuminates a DMD 320 through a condenser lens 310, first mirror 312 and second mirror 314. The operation of each pixel of the DMD 320 is driven in synchronous with the rotation of the color wheel. The lights reflected by ON-state mirrors of the DMD 320 are enlarged by the projection lens 330 for displaying the images on the screen.

Fig. 18 shows a block diagram of electrical configuration of projector. A projector 400 includes a front processing portion 410 for processing analogue image input signals or digital image input signals for generating RGB digital image data with a format plane corresponding to the number of pixels of the DMD 320, a controller 420 for controlling the DMD 320 or so based on the digital image date from the front processing portion 410, a lamp drive circuit 430 for controlling the drive of the lamp 300, a color wheel drive portion 440 for controlling the rotation of the motor of the color wheel device 1, the DMD 320, an optical system 450(condenser lens 310, first mirror 312 and second mirror 314 in fig. 17) for illuminating the light from the color wheel device 1 to the DMD 320, a projecting optical system 460 (projection lens 330 in fig. 17) for enlarging the reflected light by the DMD 320 for displaying it on the screen, and an input portion 470.

The input portion 470, for example, receives an instruction for the display mode from the user and can control the color wheel device in response to the instruction. For example, the user instructs the display mode for weighting the brightness, then the controller 420 makes the motor the normal rotation, through the color wheel drive portion 440, for selecting the first relative location. While the user instructs the display mode for weighting the coloration of such color rendering, then the controller 420 makes the motor the reverse rotation for selecting the second relative location.

While exemplary embodiments of the present invention have been described in detail, it is not intended to limit the invention to these specific exemplary embodiments according to an aspect of the invention. It should be understood that various modifications and changes may be made without departing from the inventive scope which is defined by the following claims.

The color wheel device according to the present invention is applicable with the illumination optics for separating a desired wave length from the white light from the light source and the image-display apparatus like projectors employing the space-modulation device such as DMD or the liquid crystal.

### Brief description of the drawings

Fig. 1 shows a perspective view of a color wheel device according to an embodiment of the present invention;
Fig. 2 shows an explanation of first and second color wheels used for the color wheel device;
Fig. 3 shows an explanation of a modification of a combined color ratio when the fist and second color wheels is in a first relative location;
Fig. 4 shows an explanation of a modification of a combined color ratio when the fist and second color wheels is in a second relative location;
Figs. 5 shows a relationship between an incident light I and a transmitted light T into or from the color wheel device;
Figs. 6 shows an exemplification of selecting means of the first and second color wheels;
Fig. 7(a) shows a pattern of the transmitted light T1 when the first relative location is selected;
Fig. 7(b) shows a pattern of the transmitted light T2 when the second relative location is selected;
Fig. 8 shows an explanation of the first and second color wheels used for the color wheel device according to a second embodiment of the present invention;
Fig. 9 shows an explanation of a modification of a color ratio when the fist and second color wheels are combined according to the second embodiment;
Fig. 10 shows an explanation of a modification of a color ratio when the fist and second color wheels are combined according to the second embodiment;
Fig. 11 shows another example of the first and second color wheels according to the second embodiment;
Fig. 12 shows an explanation of positioning means of the first and second color wheels;
Fig. 13 (a) shows a plane view of a base member used for the second color wheel;
Fig. 13(b) shows a side view of the base member;
Fig. 13(c) shows a rear view of the base member;
Fig. 13(d) shows a cross section view of A-A line;
Fig. 14 (a) shows a plane view of a positioning base member used for the second color wheel;
Fig. 14(b) shows a side view of the positioning base member;
Fig. 14(c) shows a rear view of the positioning base member;
Fig. 14(d) shows a cross section view of A-A line;
Fig. 15 (a) shows a plane view of a wind-receiving plate used for the second color wheel;
Fig. 15 (b) shows a side view of the wind-receiving plate;
Fig. 15(c) shows a front view of the wind-receiving plate;
Fig. 16 (a) shows a side view of a fixing pin for fixing the base member with the positioning base member;
Fig. 16(b) shows a front view of the fixing pin;
Fig. 16(c) shows a cross section view of A-A line;
Fig. 17 shows an optical system of a projector applying the color wheel device according to the embodiments;
Fig. 18 shows an electrical block diagram of the projector;
Fig. 19 shows an explanation of a conventional projector;
Fig. 20 shows an explanation of a conventional projector; and
Fig. 21 shows an explanation of a conventional projector.

### Explanation of symbols

1: color wheel device
10: first color wheel
20: second color wheel
30: main case
40: motor
50: drive circuit
60: pin
70: opening for positioning
80: wind-receiving member
102, 104, 202, 204: W transmitting region
106, 206: R transmitting region
108, 208: G transmitting region
110, 210: B transmitting region

## Claims

1. A color wheel device:
a first color wheel having transmitting regions of white color, red color, green color and blue color at a circumferential direction, the first color wheel rotated on an axis;
a second color wheel having transmitting regions of white color, red color, green color and blue color at a circumferential direction, the second color wheel rotated on the same axis of the first color wheel; and
a selecting device for selecting a relative location between the first and second color wheels,
wherein a light is entered into the first color wheel and the light is outputted from the second color wheel while the first and second color wheels are rotated.

2. The color wheel device according to claim 1, wherein the first color wheel includes a plurality of transmitting regions of white colors and any one of the transmitting regions of white color is greater than any other transmitting regions.

3. The color wheel device according to claim 1, wherein the second color wheel includes a plurality of transmitting regions of white colors and any one of the transmitting regions of white color is greater than any other transmitting regions.

4. The color wheel device according to claim 2 or 3, wherein any one of transmitting regions of red color, green color and blue color is disposed between the transmitting regions of white color in the first and second color wheels.

5. The color wheel device according to claim 1, wherein the transmitting regions combined by the first and second color wheels are white, red, green and blue colors when the selecting device selects a first relative location, and wherein the transmitting regions combined by the first and second color wheels are red, green and blue colors when the selecting device selects a second relative location.

6. The color wheel device according to claim 5, wherein the transmitting region combining the red color is greater than other transmitting regions combining other colors when the second relative location is selected.

7. The color wheel device according to claim 1, wherein first and second color wheels include transmitting regions whose central angles are 125, 55, 70, 55, and 55 degrees respectively and wherein the center angle of 125 degree of the transmitting region is white color.

8. The color wheel device according to claim 1, wherein the selecting device includes a positioning device for positioning at least one of the first and second color wheels.

9. The color wheel device according to claim 8, wherein the selecting device selects the first relative location when the first or second color wheel is rotated at a first direction and wherein the selecting device selects the second relative location when the first or second color wheel is rotated at a second direction opposite the first direction.

10. A color wheel device comprising:
a first color wheel having transmitting regions of white color, blue color, red color and green color at a circumferential direction, the first color wheel rotated on an axis;
a second color wheel having transmitting regions of white color and a first color at a circumferential direction, the second color wheel rotated on the same axis of the first color wheel; and
a positioning device for positioning the second color wheel to the first color wheel when the first and second color wheels are rotated,
wherein a light is entered into the first color wheel and the light is outputted from the second color wheel while the first and second color wheels are rotated.

11. The color wheel device according to claim 10, wherein the positioning device includes at least one projection formed on the first color wheel and at least one opening formed in the second color wheel, the opening has a length defined first and second ends, the transmitting region of the first color is overlapped with the transmitting region of white color of the first color wheel when the projection is contacted with the first end within the opening, and wherein the transmitting region of the first color is overlapped with any transmitting regions of blue, red and green colors of the first color wheel when the projection is contacted with the second end.

12. The color wheel device according to claim 11, wherein the positioning device includes at least one member for receiving a wind-pressure on the second color wheel, the member urges the projection to contact with the first end when the first color wheel is rotated at the first direction, and wherein the member urges the projection to contact with the second end when the first color wheel is rotated at the second direction.

13. An illumination optics device comprising:
a color wheel device; and
a light source for providing the light with the color wheel device,
the color wheel device comprising;
a first color wheel having transmitting regions of white color, red color, green color and blue color at a circumferential direction, the first color wheel rotated on an axis;
a second color wheel having transmitting regions of white color, red color, green color and blue color at a circumferential direction, the second color wheel rotated on the same axis of the first color wheel; and
a selecting device for selecting a relative location between the first and second color wheels,
wherein a light is entered into the first color wheel and the light is outputted from the second color wheel while the first and second color wheels are rotated.

14. A projector comprising:
a color wheel device;
a light source for providing the light with the color wheel device;
a modulation device for modulating the light transmitted from the color wheel device; and
a projection device for projecting the modulated light the color wheel device comprising:
a first color wheel having transmitting regions of white color, red color, green color and blue color at a circumferential direction, the first color wheel rotated on an axis;
a second color wheel having transmitting regions of white color, red color, green color and blue color at a circumferential direction, the second color wheel rotated on the same axis of the first color wheel; and
a selecting device for selecting a relative location between the first and second color wheels,
wherein a light is entered into the first color wheel and the light is outputted from the second color wheel while the first and second color wheels are rotated.

15. The projector according to claim 14 further comprising an input device for selecting a display mode among a plurality of display modes, wherein the selecting device selects the relative location between the first and second color wheels in response to the input from the input device.

16. The projector according to claim 14, wherein the modulation device includes DMD or a liquid crystal device.
